# EUROPEAN PATENT SPECIFICATION

(11) **EP 2 806 844 B1**
(45) Date of publication and mention of the grant of the patent: **30.09.2020**
(21) Application number: 13705293.2
(22) Date of filing: 25.01.2013
(51) Int. Cl.: A61G 7/057

(54) **PRESSURE MEASUREMENT SYSTEMS AND METHODS WITH MOISTURE VAPOR CONTROL**
DRUCKMESSUNGSSYSTEME UND VERFAHREN MIT FEUCHTIGKEITSDAMPFKONTROLLE
SYSTÈMES DE MESURE DE PRESSION ET PROCÉDÉS DE RÉGULATION DE VAPEUR D'HUMIDITÉ

(30) Priority: 26.01.2012 US 201261591158 P
(43) Date of publication of application: 03.12.2014
(73) Proprietor: Huntleigh Technology Limited, Dunstable, Bedfordshire LU5 5XF (GB)
(72) Inventor: NIEDERKROM, Christopher, Dunstable Bedfordshire LU5 5XF (GB); YOUNGDAHL, John, Dunstable Bedfordshire LU5 5XF (GB); VRZALIK, John, Dunstable Bedfordshire LU5 5XF (GB); BURGETT, Julie, Dunstable Bedfordshire LU5 5XF (GB)
(74) Representative: Ström & Gulliksson AB
(86) International application number: PCT/US2013/023136
(87) International publication number: WO 2013/112828

(56) References cited:
- EP-A1- 1 535 547
- EP-A1- 1 645 258
- EP-A1- 2 394 623
- EP-A2- 2 298 264
- WO-A1-2004/082551
- WO-A2-2010/119441
- WO-A2-2013/010086
- US-A1- 2007 261 548

## Description

### Field of the Invention

The present disclosure relates generally to support surfaces for independent use and for use in association with beds and other support platforms, and more particularly but not by way of limitation to support surfaces that measure patient interface pressure and aid in the prevention, reduction, and/or treatment of decubitus ulcers and the transfer of moisture and/or heat from the body.

### BACKGROUND

Patients and other persons restricted to bed for extended periods incur the risk of forming decubitus ulcers. Decubitus ulcers (commonly known as bed sores, pressure sores, pressure ulcers, etc.) can be formed when blood supplying the capillaries below the skin tissue is interrupted due to external pressure against the skin. This pressure can be greater than the internal blood pressure within a capillary and thus, occlude the capillary and prevent oxygen and nutrients from reaching the area of the skin in which the pressure is exerted. Moreover, moisture and heat on and around the person can exacerbate ulcers by causing skin maceration, among other associated problems.

Existing systems used for measurement of patient interface pressures typically have poor moisture vapor transmission rates. This can lead to an increase in the likelihood of decubitus ulcer formation. Furthermore, existing systems for providing improved moisture vapor transmission do not provide for the measurement of interface pressure.

Certain systems developed to address this problem are focused on off-loading the patient through means of alternating pressure surfaces which vary the load point of the patient such that damage is reduced. Sensors associated with inflatable fluid bladders of a mattress, such as that described in the patient support of WO2004/082551, may be used for detecting and adjusting the inflation these bladders to achieve a desired pressure profile.

Other devices have been developed which provide climate management by allowing air to move under the patient to prevent fluids collecting, or evaporating any moisture or fluids which may have collected. These are typically known as low air loss systems. EP 22298264, for example, issued to Lachenbruch discloses an low air loss system including an inflatable person support surface that may in some instances include sensors for detecting one of the temperature of a person contacting surface, relative humidity of the interface between a patient and the person contact surface, amount of shear between a patient and the person contacting surface, an interface pressure between a patient and the person contact surface or a pressure of the fluid inside the fluid bladders of a mattress cover. These sensors, however, are not configured as a pressure sensing mat forming part of a mattress coverlet. Lachenbruch also does not disclose a pressure-sensing mat or a system for regulating air flow based on a change in the thickness of a spacer material of a mattress cover. Other similar mattress overlay systems, such as EP1645258, share the same deficiencies.

### Summary

Exemplary embodiments of the present disclosure are directed to apparatus, systems and methods to aid in the prevention of decubitus ulcer formation and/or promote the healing of such ulcer formation.

Exemplary embodiments include a cover sheet comprising: a spacer material comprising an first surface and a second surface and a thickness measured between the first surface and the second surface; a vapor permeable material proximal to the first surface of the spacer material; and a pressure-sensing mat proximal to the first surface of the spacer material. In certain embodiments, the cover sheet further comprises an air mover configured to provide an air flow through the spacer material. In particular embodiments, the air mover can be configured to push air away from the air mover. In certain embodiments, the air mover can be configured to pull air towards the air mover. In specific embodiments, the air mover can be configured to increase the air flow if the pressure-sensing mat detects a pressure above a threshold value.

In particular embodiments, the cover sheet can be configured to provide a visual or audible indication if the pressure-sensing mat detects a pressure above a threshold value. In certain embodiments, the pressure-sensing mat comprises a first electrical conductor, a second electrical conductor, and a compressible dielectric between the first electrical conductor and the second electrical conductor. In specific embodiments, the first electrical conductor is proximal to a lower surface of the pressure-sensing mat and the second electrical conductor is proximal to an upper surface of the pressure-sensing mat. In particular embodiments, the pressure-sensing mat can be configured to detect an increase in pressure that can be correlated to a decrease in thickness of the spacer material.

Particular embodiments may further comprise an indicator configured to provide an indication if the pressure-sensing mat detects a pressure above a threshold value. In certain embodiments, the indication may be a visual indication and/or an audible indication. In specific embodiments, the spacer material may comprise one of the following: open cell foam; natural or synthetic polymer particles, filaments, or strands; cotton fibers; polyester fibers; flexible metals and metal alloys; shape memory metals and metal alloys, and shape memory plastics. In specific embodiments, the cover sheet can be placed upon a mattress. In certain embodiments, the mattress may be an alternating pressure therapy mattress. In particular embodiments, the mattress may be an kinetic therapy mattress, the mattress is configured to change position in response to a change in pressure detected by the pressure-sensing mat.

Exemplary embodiments include a method of providing moisture vapor transfer from a patient supported on a support mattress, the method comprising: providing air flow to a cover sheet; sensing a pressure applied to the cover sheet with the pressure-sensing mat; and providing an indication if the pressure sensed by the pressure-sensing mat exceeds a threshold value. In certain embodiments, the cover sheet can comprise: a spacer material comprising an first surface and a second surface and a thickness measured between the first surface and the second surface; a vapor permeable material proximal to the first surface of the spacer material; and a pressure-sensing mat proximal to the second surface of the spacer material. In particular embodiments the indication may be a visual indication and/or an audible indication.

Particular embodiments further comprise increasing the air flow if the pressure sensed by the pressure-sensing mat exceeds the threshold value. In specific embodiments, the air flow through the spacer material can be directed away from an air mover. In certain embodiments, the air flow through the spacer material can be directed toward an air mover.

### Brief Description of the Drawings

While exemplary embodiments of the present invention have been shown and described in detail below, it will be clear to the person skilled in the art that changes and modifications may be made without departing from the scope of the invention. As such, that which is set forth in the following description and accompanying drawings is offered by way of illustration only and not as a limitation. The actual scope of the invention is defined by the following claims.

In addition, one of ordinary skill in the art will appreciate upon reading and understanding this disclosure that other variations for the disclosure described herein can be included within the scope of the present disclosure. For example, portions of the support system shown and described may be incorporated with existing mattresses or support materials. Other embodiments may utilize the support system in seating applications, including but not limited to, wheelchairs, chairs, recliners, benches, etc.

In the following Detailed Description of Disclosed Embodiments, various features are grouped together in several embodiments for the purpose of streamlining the disclosure. This method of disclosure is not to be interpreted as reflecting an intention that exemplary embodiments of the invention require more features than are expressly recited in each claim. Rather, as the following claims reflect, inventive subject matter lies in less than all features of a single disclosed embodiment. Thus, the following claims are hereby incorporated into the Detailed Description of Disclosed Embodiments, with each claim standing on its own as a separate embodiment.
FIG. 1 illustrates a perspective view of a first exemplary embodiment of a cover sheet and a support mattress installed on a support mattress.
FIG. 2 illustrates a section view of the exemplary embodiment of FIG. 1 taken along line 2-2.
FIG. 3 illustrates an exploded view of the embodiment of FIG. 1.

### Detailed Description of Disclosed Embodiments

Exemplary embodiments of the present disclosure are directed to apparatus, systems and methods to aid in the prevention of decubitus ulcer formation and/or promote the healing of such ulcer formation. For example, in various embodiments, preventing ulcer formation and/or healing decubitus ulcers can be accomplished through the use of a multi-layer cover sheet. Exemplary embodiments of the multi-layer cover sheet can be utilized to aid in the removal of moisture, vapor, and heat adjacent and proximal the patient surface interface and in the environment surrounding the patient by providing a surface that absorbs and/or disperses the moisture, vapor, and heat from the patient. In addition, the exemplary embodiments of the multi-layer cover sheet can be utilized in combination with a number of support surfaces or platforms to provide a reduced interface pressure between the patient and the cover sheet on which the patient is positioned. This reduced interface pressure can help to prevent the formation of decubitus ulcers.

Existing systems can also include a cover sheet with a manifolding or spacer material that allows air flow through the material to aid in the removal of moisture, vapor, and heat adjacent and proximal the patient surface interface. Such systems may also provide an air mover to provide for increased air flow through the spacer material.

However, if the weight of the patient reduces the thickness of the spacer material below a certain amount, the ability of the system to function properly is reduced and skin maceration may occur. Changes in the underlying surface may be possible to ensure proper operation if the user is alerted to the issue. Also, incorrect operation of systems may result in pressure points under the patient which could also lead to skin breakdown and ulcer formation.

It is therefore desirable to alert the caregiver if there is a locus of high load pressure under the patient which could result in skin damage and if flow in the manifolding material is restricted or blocked such that fluids are not managed to reduce the chance of maceration. Additionally, it is desirable to provide such benefits within a low cost disposable product without adding complication and cost to the design.

In various exemplary embodiments, the cover sheet may include a number of layers. Each layer may be formed of a number of different materials that exhibit various properties. These properties may include the level of friction or shear of a surface, the permeability of a vapor, a gas, a liquid, and/or a solid, and various phases of the vapor, the gas, the liquid, and the solid, and other properties.

For example, in exemplary embodiments, the multi-layer cover sheet may include materials that provide for a low air loss feature, where one or more layers exhibit various air, vapor, and liquid permeable properties and/or where one or more layers are bonded or sealed together. As used herein, a low air loss feature of a multi-layer cover sheet includes, but is not limited to: a multi-layer cover sheet that allows air and vapor to pass through the first or top layer in the presence of a partial pressure difference in vapor between the internal and external environments of the multi-layer cover sheet; a multi-layer cover sheet that allows air and vapor to pass through the first layer in the absence of a partial pressure difference in vapor between the internal and external environments of the multi-layer cover sheet; and a multi-layer cover sheet that allows air and vapor to move into and/or out of the multi-layer cover sheet through the apertures in one or more layers.

In various exemplary embodiments, systems are provided that can include a number of components that both aid in prevention of decubitus ulcer formation and to remove moisture and/or heat from the patient. For example, systems can include a multi-layer cover sheet that can be used in conjunction with a variety of support surfaces, such as an inflatable mattress, a foam mattress, a gel mattress, a water mattress, or a RIK® Fluid Mattress of a hospital bed. In such exemplary embodiments, features of the multi-layer cover sheet can help to remove moisture from the patient, while features of the inflatable or foam mattress can aid in the prevention and/or healing of decubitus ulcers by further lowering interface pressures at areas of the skin in which external pressures are typically high, as for example, at bony prominences such as the heel and the hip area of the patient. In other exemplary embodiments, systems can include the multi-layer cover sheet used in conjunction with a chair or other support platform.

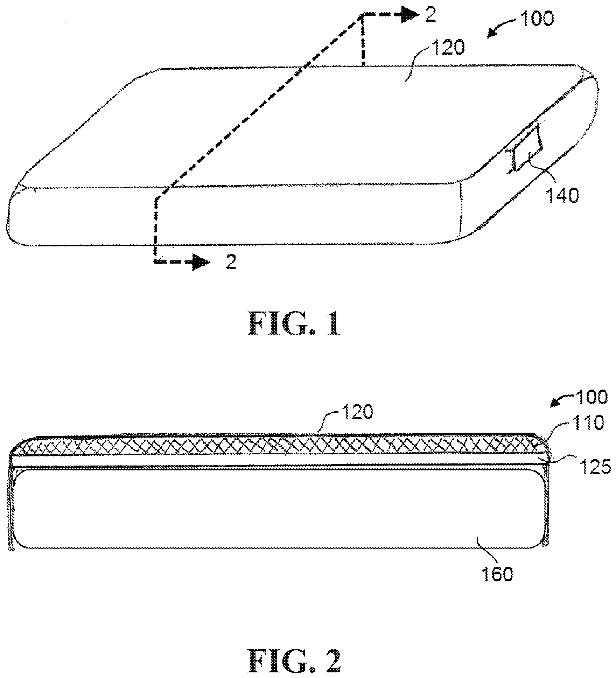

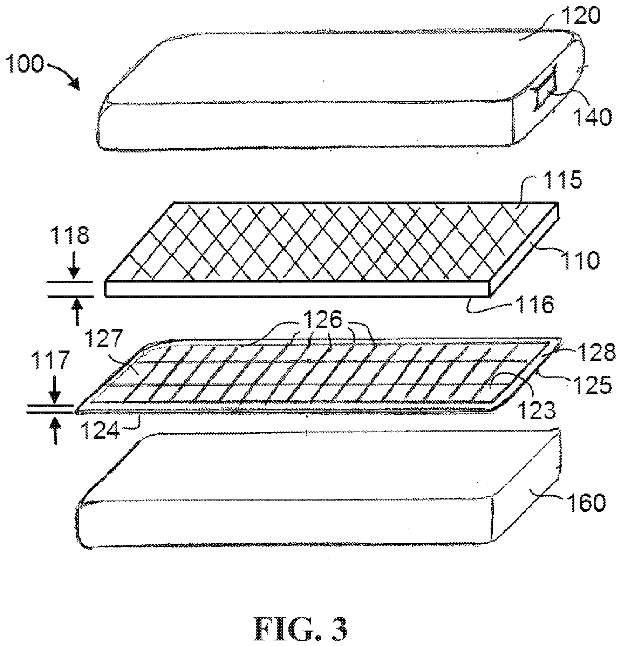

Referring initially to FIGS. 1-3 an exemplary embodiment of a cover sheet 100 is illustrated disposed on a support mattress 160. FIG. 1 illustrates a perspective view of cover sheet 100 installed on support mattress 160. FIG. 2 illustrates a section view take along line 2-2 of FIG. 1, while FIG. 3 provides an exploded view of FIG. 1. It is understood that the figures are not to scale and that the spacing between elements may be altered for clarity.

In this exemplary embodiment, cover sheet 100 comprises a spacer material 110 comprising an upper surface 115, a lower surface 116, and a thickness 118 measured between the upper surface 115 and the lower surface 116. In this embodiment, cover sheet 100 also comprises a vapor permeable material 120 proximal to upper surface 115. In the embodiment shown, cover sheet 100 comprises a pressure-sensing mat 125 located between spacer material 110 and support mattress 160. In particular embodiments, support mattress 160 may be configured as an alternating pressure therapy mattress, while in other embodiments support mattress 160 may be configured as a standard (*e.g.*, a pressure-redistribution) mattress or a kinetic therapy mattress.

Examples of materials that can be used to form spacer material 110 can include, but are not limited to, natural and synthetic polymers in the form of particles, filaments, strands, foam (e.g., open cell foam), among others, and natural and synthetic materials such as cotton fibers, polyester fibers, and the like. Other materials can include flexible metals and metal alloys, shape memory metals and metal alloys, and shape memory plastics. These materials can include elastic, super elastic, linear elastic, and/or shape memory properties that allow the flexible material to flex and bend and to form varying shapes under varying conditions (e.g., compression, strain, temperature, bed articulation, etc.)

In the illustrated embodiment, cover sheet 100 comprises an air mover 140 configured to provide air flow through spacer material 110. In certain embodiments air mover 140 may be configured to push air away from air mover 140 and through spacer material 110. In other embodiments, air mover 140 may be configured to pull air toward air mover 140 and through spacer material 110.

As used in this disclosure, the term "spacer material" (and related terms) should be construed broadly to include any material that includes a volume of air within the material and allows air to move through the material. In exemplary embodiments, spacer materials allow air to flow through the material when a person is laying on the material while the material is supported by a mattress. Examples of such spacer materials include open cell foam, polymer particles, and a material sold by Tytex® under the trade name AirX™.

In exemplary embodiments, pressure-sensing mat 125 may comprise a plurality of electrical conductors 126 separated by a compressible dielectric 127. For example, in exemplary embodiments, a first portion of electrical conductors 126 can be placed proximal to a lower surface 124 of pressure mat 125, and a second portion of electrical conductors 126 can be placed proximal to an upper surface 123 of pressure mat 125. In particular embodiments, electrical conductors 126 form a grid across pressure-sensing mat 125 with the first and second portions of electrical conductors 126 perpendicular to each other. In certain embodiments, compressible dielectric 127 may be located between the perpendicular electrical conductors 126 in a middle portion of pressure mat 125.

In certain exemplary embodiments, electrical power is provided to pressure-sensing mat 125, which creates a capacitance in the grid of electrical conductors 126. During use, compressible dielectric 127 may be compressed and a thickness 117 of pressure-sensing mat 125 reduced, (*e.g.*, as a result of the weight of a person supported by support mattress 160 and cover sheet 100). The reduction in thickness 117 can be detected by a change in capacitance of the electrical conductors 126. In exemplary embodiments, spacer material 110 is placed between pressure-sensing mat 125 and a person supported by cover sheet 100 and mattress 160. Therefore a reduction in thickness 117 of pressure-sensing mat 125 can be correlated to a reduction in thickness 118 of spacer material 110. In specific embodiments, mattress 160 may be able to change position in response to a change in pressure detected by pressure-sensing mat 125.

In exemplary embodiments, pressure-sensing mat 125 comprises a protective outer layer 128 to contain compressible dielectric 127 and electrical conductors 126. In the illustration of FIG. 3, a top portion of protective outer layer 128 is not shown in order to make visible electrical conductors 126 and compressible dielectric 127. In exemplary embodiments, protective outer layer 128 is comprised of a durable material that can reduce the likelihood that electrical conductors 126 are exposed to the outside environment. In particular embodiments, the material properties that result in high durability of protective outer layer 128 (*e.g.*, to provide protection of electrical conductors 126 and compressible dielectric 127) can result in low moisture vapor transfer rates for pressure-sensing mat 125. Moisture vapor can therefore accumulate in the interface between the person's skin and pressure mat 125. As a result, the use of pressure-sensing mat 125 can potentially increase the likelihood that decubitus ulcers may form on the patient.

It may therefore be desirable to provide higher moisture vapor transfer rates than are provided by protective outer layer 128 of pressure-sensing mat 125. Exemplary embodiments of the present disclosure provide a spacer material 110 and vapor permeable material 120 between pressure-sensing mat 125 and a person being supported by support mattress 160. Air mover 140 is configured to provide air flow through spacer material and improve moisture vapor transfer, as further explained below.

During use of exemplary embodiments, moisture vapor may be transferred from a person (and the surrounding air) through vapor permeable material 120 and into air pockets within spacer material 110. Moisture vapor will continue to transfer to air pockets within spacer material 110 while the air pockets are at a lower relative humidity than the air adjacent the person. As the relative humidity of the air pockets increases and approaches the relative humidity of the air adjacent the person, the transfer rate of the moisture vapor will decrease. It is therefore desirable to maintain a lower relative humidity of the air pockets within spacer material 110 than the relative humidity of the air adjacent the person.

As the moisture vapor is transferred to air pockets within spacer material 110, it is therefore desirable to remove moisture vapor from the air pockets and lower the relative humidity of the air within spacer material 110. By removing moisture vapor from the air within spacer material 110, the transfer rate of moisture vapor from the air surrounding a person can be maintained at a more uniform level. Airflow provided by air mover 140 can be directed through spacer material 110 and assist in removing moisture vapor from within spacer material 110.

However, the weight of a person supported by cover sheet 100 (and support mattress 160) can compress thickness 118 of spacer material 110. If thickness 118 is compressed sufficiently, it can restrict airflow through spacer material 110 and reduce the effectiveness of cover sheet 110 to transfer moisture vapor. In certain embodiments, it may be desirable to provide an indication to alert a user when a threshold level of pressure is detected by pressure-sensing mat 125 (which can be correlated to an accompanying reduction in thickness 118 of spacer material 110).

In certain embodiments, the indication can be a visual or audible indication. Such an indication can alert a user that spacer material 110 has been compressed sufficient to restrict air flow from air mover 140 below a desired level. In certain embodiments, cover sheet 100 may comprise a control system configured to increase air flow from air mover 140 in response to a threshold pressure detected by pressure-sensing mat 125.

In specific embodiments, the pressure detected by pressure-sensing mat 125 can be monitored by a controller which may comprise an electronic comparator circuit which will detect the pressure change and then vary the speed of a motor driving air mover 140. In particular embodiments, the controller may have one triggering threshold, or multiple different thresholds, which alter the speed of air mover 140. Such control system can be advantageous, for example, with a battery-powered system used for a light weight patient, where air mover 140 may only need to operate at a low power level for extended durations, and increase power when spacer material 110 is sufficiently compressed. In particular embodiments, control system may comprise a motor speed controller, which may use variable voltage or pulse-width modulation (PWM) control to vary the speed of the motor within air mover 140.

As described herein, cover sheet 100 can provide for effective moisture vapor transfer and reduce the likelihood of decubitus ulcer formation.

## Claims

1. A cover sheet (100) to be used in conjunction with a patient support mattress, said cover sheet (100) for aiding in the prevention of decubitus ulcers and the transfer of moisture from the body of a patient, comprising:
a flexible spacer material (110) comprising a first surface (115) and a second surface (116) and a thickness measured between the first surface (115) and the second surface (116),
the spacer material (110) allowing air flow through the spacer material to aid in the removal of moisture, vapor and heat adjacent and proximal a patient surface interface;
a vapor permeable material (120) proximal to the first surface (115) of the spacer material; and
a pressure-sensing mat (125) proximal to the second surface (116) of the spacer material, wherein the pressure-sensing mat (125) is configured to detect a pressure which is correlated to an accompanying reduction in thickness (118) of the spacer material (110), an air mover (140) configured to provide an air flow through the spacer material (110);
an indicator configured to provide an indication if the pressure-sensing mat (125) detects a pressure above a threshold value and thus a decrease in thickness of the spacer material (110) that is sufficient to restrict air flow through the spacer material (110) and reduce the cover sheet's effectiveness to transfer moisture vapor.

2. The cover sheet (100) of claim 1, wherein the cover sheet (100) is configured to provide a visual or audible indication if the pressure-sensing mat (125) detects a pressure above a threshold value.

3. The cover sheet (100) of any one of the previous claims, wherein the air mover (140) is configured to pull air towards the air mover (140).

4. The cover sheet (100) of any of the previous claims, wherein the air mover (140) is configured to increase the air flow if the pressure-sensing mat (125) detects a pressure above a threshold value.

5. The cover sheet (100) of any one of the previous claims, wherein the pressure-sensing mat (125) comprises a first electrical conductor (126), a second electrical conductor (126), and a compressible dielectric (127) between the first electrical conductor (126) and the second electrical conductor (126).

6. The cover sheet (100) of claim 5, wherein the first electrical conductor (126) is proximal to a lower surface (124) of the pressure-sensing mat (125) and the second electrical conductor (126) is proximal to an upper surface (123) of the pressure-sensing mat (125).

7. The cover sheet (100) of any one of the previous claims, wherein the spacer material (110) comprises one of the following: open cell foam; natural or synthetic polymer particles, filaments, or strands; cotton fibers; polyester fibers; flexible metals and metal alloys; shape memory metals and metal alloys, and shape memory plastics.

8. A patient support system comprising the cover sheet (100) of any one of the claims 1-7 and a mattress (160), wherein the cover sheet (100) is placed upon the mattress (160).

9. The patient support system of claim 8, **characterised in that** the mattress (160) is an alternating pressure therapy mattress.

## Patentansprüche

1. Decklage (100) zur Verwendung in Verbindung mit einer Patientenstützmatratze, wobei die Decklage (100) zur Unterstützung bei der Verhinderung von Dekubitusgeschwüren und der Ableitung von Feuchtigkeit vom Körper eines Patienten dient, umfassend:
ein flexibles Spacer-Material (110) umfassend eine erste Oberfläche (115) und eine zweite Oberfläche (116) und eine zwischen der ersten Oberfläche (115) und der zweiten Oberfläche (116) gemessene Dicke, wobei das Spacer-Material (110) einen Luftstrom durch das Spacer-Material ermöglicht, um die Ableitung von Feuchtigkeit, Dampf und Wärme benachbart und proximal zu einer Grenzfläche der Patientenoberfläche zu unterstützen;
ein dampfdurchlässiges Material (120) proximal zu der ersten Oberfläche (115) des Spacer-Materials; und
eine Drucksensormatte (125) proximal zu der zweiten Oberfläche (116) des Spacer-Materials, wobei die Drucksensormatte (125) zum Erfassen eines Drucks eingerichtet ist, der korreliert ist mit einer damit einhergehenden Verringerung der Stärke (118) des Spacer-Materials (110), einen Luftbeweger (140), der zum Bereitstellen eines Luftstroms durch das Spacer-Material (110) eingerichtet ist;
einen Indikator, der so ausgestaltet ist, dass er eine Anzeige bereitstellt, wenn die Drucksensormatte (125) einen Druck über einem Schwellenwert und somit eine Abnahme der Stärke des Spacer-Materials (110) erfasst, die ausreicht, um den Luftstrom durch das Spacer-Material (110) zu beschränken und die Wirksamkeit der Decklage zur Ableitung von Feuchtigkeitsdampf zu reduzieren.

2. Decklage (100) nach Anspruch 1, wobei die Decklage (100) so ausgebildet ist, dass sie eine optische oder akustische Anzeige bereitstellt, wenn die Drucksensormatte (125) einen Druck über einem Schwellenwert detektiert.

3. Decklage (100) nach einem der vorangegangenen Ansprüche, wobei der Luftbeweger (140) so eingerichtet ist, dass er Luft in Richtung des Luftbewegers (140) zieht.

4. Decklage (100) nach einem der vorangegangenen Ansprüche, wobei der Luftbeweger (140) so konfiguriert ist, dass er den Luftstrom erhöht, wenn die Drucksensormatte (125) einen Druck über einem Schwellenwert detektiert.

5. Decklage (100) nach einem der vorangehenden Ansprüche, wobei die Drucksensormatte (125) einen ersten elektrischen Leiter (126), einen zweiten elektrischen Leiter (126) und ein komprimierbares Dielektrikum (127) zwischen dem ersten elektrischen Leiter (126) und dem zweiten elektrischen Leiter (126) umfasst.

6. Decklage (100) nach Anspruch 5, wobei sich der erste elektrische Leiter (126) proximal zu einer unteren Oberfläche (124) der Drucksensormatte (125) und der zweite elektrische Leiter (126) proximal zu einer oberen Oberfläche (123) der Drucksensormatte (125) ist.

7. Decklage (100) nach einem der vorangehenden Ansprüche, wobei das Spacer-Material (110) aus einem der folgenden Materialien besteht: offenzelliger Schaumstoff; natürliche oder synthetische Polymerpartikel, -filamente oder-stränge; Baumwollfasern; Polyesterfasern; flexible Metalle und Metalllegierungen; Metalle mit Formgedächtnis und Metalllegierungen und Kunststoffe mit Formgedächtnis.

8. Patientenunterstützungssystem, umfassend die Decklage (100) nach einem der Ansprüche 1-7 und eine Matratze (160), wobei die Decklage (100) auf die Matratze (160) gelegt wird.

9. Patientenunterstützungssystem nach Anspruch 8, **dadurch gekennzeichnet, dass** die Matratze (160) eine Wechseldruck-Therapie-Matratze ist.

## Revendications

1. Feuille de couverture (100) pour une utilisation en conjonction avec un matelas de support pour patient, ladite feuille de couverture (100) est destinée à contribuer à la prévention des ulcères de décubitus et au transfert de l'humidité provenant du corps d'un patient, comprenant :
un matériau d'espacement (110) flexible comprenant une première surface (115) et une seconde surface (116) et une épaisseur mesurée entre la première surface (115) et la seconde surface (116), le matériau d'espacement (110) permettant un écoulement d'air à travers le matériau d'espacement pour contribuer à l'élimination de l'humidité, de la vapeur et de la chaleur adjacente et proximale à une interface de surface de patient ;
un matériau perméable à la vapeur (120) proximal à la première surface (115) du matériau d'espacement ; et
un tapis de détection de pression (125) proximal à la seconde surface (116) du matériau d'espacement, dans lequel le tapis de détection de pression (125) est configuré pour détecter une pression qui est corrélée à une réduction de l'épaisseur (118) du matériau d'espacement (110) ;
un dispositif de déplacement d'air (140) configuré pour fournir un flux d'air à travers le matériau d'espacement (110) ;
un indicateur configuré pour fournir une indication si le tapis de détection de pression (125) détecte une pression supérieure à une valeur seuil et par conséquent une diminution de l'épaisseur du matériau d'espacement (110) qui est suffisante pour entraver un écoulement d'air à travers le matériau d'espacement (110) et diminuer l'efficacité de la feuille de couverture à transférer une vapeur d'humidité.

2. Feuille de couverture (100) selon la revendication 1, dans laquelle la feuille de couverture (100) est configurée pour fournir une indication visuelle ou sonore si le tapis de détection de pression (125) détecte une pression supérieure à une valeur seuil.

3. Feuille de couverture (100) selon l'une quelconque des revendications précédentes, dans laquelle le dispositif de déplacement d'air (140) est configuré pour aspirer de l'air vers le dispositif de déplacement d'air (140).

4. Feuille de couverture (100) selon l'une quelconque des revendications précédentes, dans laquelle le dispositif de déplacement d'air (140) est configuré pour accroître le flux d'air si le tapis de détection de pression (125) détecte une pression supérieure à une valeur seuil.

5. Feuille de couverture (100) selon l'une quelconque des revendications précédentes, dans laquelle le tapis de détection de pression (125) comprend un premier conducteur électrique (126), un second conducteur électrique (126), et un diélectrique compressible (127) entre le premier conducteur électrique (126) et le second conducteur électrique (126) .

6. Feuille de couverture (100) selon la revendication 5, dans laquelle le premier conducteur électrique (126) est proximal à une surface inférieure (124) du tapis de détection de pression (125) et le second conducteur électrique (126) est proximal à une surface supérieure (123) du tapis de détection de pression (125).

7. Feuille de couverture (100) selon l'une quelconque des revendications précédentes, dans laquelle le matériau d'espacement (110) comprend l'un des éléments suivants : une mousse à cellules ouvertes ; des particules, des filaments ou des brins de polymère naturel ou synthétique ; des fibres de coton ; des fibres de polyester ; des métaux ou des alliages métalliques flexibles ; des métaux ou des alliages métalliques à mémoire de forme, et des plastiques à mémoire de forme.

8. Système de support de patient comprenant la feuille de couverture (100) selon l'une quelconque des revendications 1 à 7 et un matelas (160), dans lequel la feuille de couverture (100) est placée sur le matelas (160) .

9. Système de support de patient selon la revendication 8, **caractérisé en ce que** le matelas (160) est un matelas thérapeutique à pression alternée.
